# EUROPEAN PATENT SPECIFICATION

(11) **EP 0 950 270 B1**
(45) Date of publication and mention of the grant of the patent: **12.03.2003**
(21) Application number: 97951684.6
(22) Date of filing: 24.12.1997
(51) Int. Cl.: H01Q 23/00, H01Q 21/29, H01Q 1/42, H04B 7/06

(54) **METHOD FOR INTEGRATING ANTENNAS IN A DISTRIBUTED ANTENNA SYSTEM**
VERFAHREN ZUR INTEGRATION VON ANTENNEN IN EINEM VERTEILTEN ANTENNENSYSTEM
PROCEDE PERMETTANT D'INTEGRER DES ANTENNES DANS UN SYSTEME D'ANTENNES DISTRIBUE

(30) Priority: 31.12.1996 US 775294
(43) Date of publication of application: 20.10.1999
(73) Proprietor: ERICSSON INC., Research Triangle Park, NC 27709 (US)
(72) Inventor: NAIDU, Arun, Woodinwille, WA 96072 (US); BOHAYCHUK, J., Ron, Oak Harbor, WA 98277 (US)
(74) Representative: Wennerholm, Kristian
(86) International application number: US9722977
(87) International publication number: WO98029922

(56) References cited:
- EP-A- 0 668 627
- FR-A- 2 710 195
- GB-A- 2 290 006
- GB-A- 2 301 712
- US-A- 5 548 813
- AKIMOTO M ET AL: "CHARACTERISTICS OF A BIDIRECTIONAL PRINTED DIPOLE ANTENNA FOR STREET-MICROCELLULAR SYSTEMS" 1996 IEEE 46TH. VEHICULAR TECHNOLOGY CONFERENCE, MOBILE TECHNOLOGY FOR THE HUMAN RACE ATLANTA, APR. 28 - MAY 1, 1996, vol. VOL. 1, no. CONF. 46, 28 April 1996, INSTITUTE OF ELECTRICAL AND ELECTRONICS ENGINEERS, pages 357-361, XP000594310

## Description

### Field of the Invention

The present invention relates generally to transmission systems using distributed antennas. More particularly, the present invention is directed to an arrangement for integrating antennas in a distributed antenna system.

### Background of the Invention

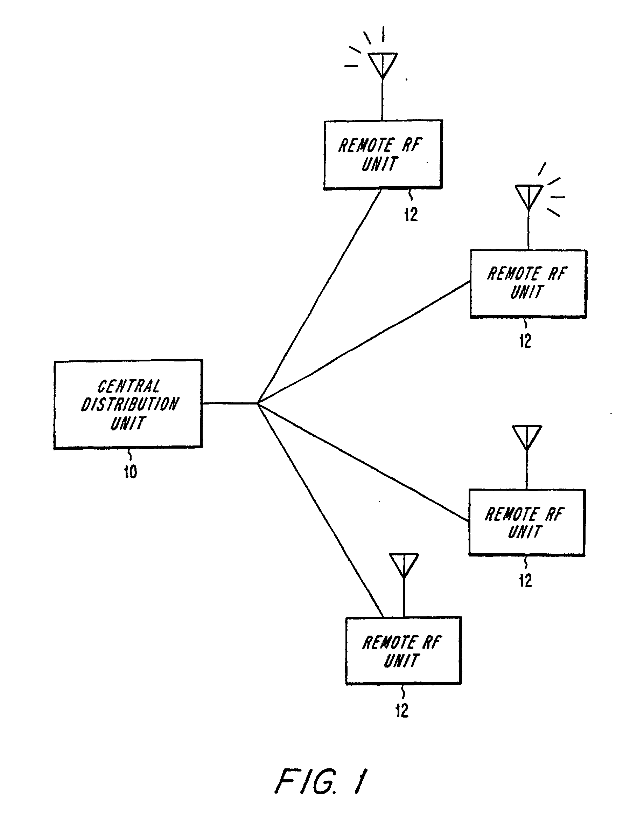

Referring now to FIG. 1, an exemplary distributed antenna system is shown. Such a system can be used, for example, to distribute wireless carrier signals to and from remote locations using a cable television transmission network. The system includes a central distribution unit 10 and a plurality of remote RF units 12. The remote units 12 perform RF signal processing and are associated with radiating elements (antennas) to propagate the processed signals. Preferably, the system is designed such that each antenna provides efficient coverage to a desired coverage area, without coverage gaps and without overlapping (i.e., causing interference) with neighboring coverage areas.

A few examples of antenna arrangements are disclosed in the following documents. Document EP A 0668627 discloses an antenna system comprising of a plurality of subarrays arranged strategically for a cellular radio base station. Document GB A 2301712 discloses an integrated directional antenna that provides a directed or focused beam from a resonant cavity. Finally, Document FR A 2710195 discloses an antenna and circuit assembly.

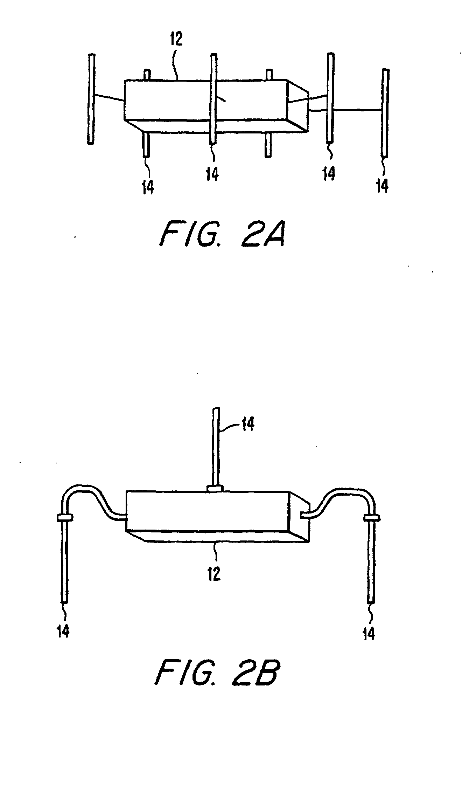

To obtain sufficient antenna gain and coverage area in a typical distributed antenna system, an external element such as a monopole or dipole antenna is provided in each RF unit. Such external antennas are typically fed by a coaxial cable. Exemplary remote units having external antennas 14 are shown in FIGS. 2A-B.

The remote RF units are typically placed in public and/or outdoor locations. Because of their locations, environmental factors such as rain, ice, and wind are important considerations in the design of a unit. For units located in public areas, aesthetic considerations are also important. Because external antennas in conventional units protrude from the unit, they are subject to severe weather conditions and are generally regarded as aesthetically undesirable. Further, dipole and monopole antennas generally have poor azimuthal directivity. Therefore, their propagation path(s) are not easily controlled to provided efficient coverage over a desired area.

Thus, in distributed antenna systems (systems made up of multiple units connected to a central combiner), the remote units preferably: a) provide coverage over a desired area, without coverage gaps or interference with neighboring coverage areas; b) are weatherproof; c) are aesthetic; and d) are efficiently integrated.

As described above, known remote units use external dipole or monopole antennas connected to coaxial cable. Such remote units meet none of the above criteria.

Accordingly, it would be desirable for a remote unit in a distributed antenna system to efficiently provide coverage over a desired coverage area, without coverage gaps or interference with neighboring coverage areas.

It would also be desirable for a remote unit to be weatherproof, and for a remote unit to take aesthetic considerations into account.

It would also be desirable for a remote unit to have efficiently integrated antennas.

### Summary of the Invention

To overcome the above-noted problems, and provide other advantages, the present invention provides for a method and arrangement for integrating multiple antennas in a distributed antenna system. According to the method of the present invention, a plurality of antennas in a distributed antenna communication system are integrated by providing a plurality of antennas on one or more surfaces of a housing. Each antenna is capable of providing signal propagation in a desired direction. The plurality of antennas inside the housing are integrated by providing one or more internal RF combining circuits, and one or more internal RF dividing circuits. Each combining circuit combines signals received from two or more of the antennas, and each dividing circuit divides signals to be propagated from one signal source into at least two signals for propagation from at least two antennas.

According to the arrangement of the present invention, an integrated antenna unit includes a plurality of antennas provided on one or more surfaces of a housing. Each antenna is capable of providing signal propagation in a desired direction. The arrangement also includes one or more internal RF combining circuits, and one or more internal RF dividing circuits. Each combining circuit combines signals received from two or more of the antennas, and each dividing circuit divides signals to be propagated from one signal source into at least two signals for propagation from at least two antennas.

As a result of the method and arrangement according to the present invention, a remote unit of a distributed antenna system can be made which provides efficient coverage over one or more desired areas, is substantially weatherproof, which can be easily adapted to desired aesthetic criteria, and in which the antennas are efficiently integrated.

### Brief Description of the Drawings

The features and advantages of the present invention can be understood more fully upon reading the following Detailed Description of the Preferred Embodiments in conjunction with the accompanying drawings, in which like reference indicia designate like elements, and in which:
FIG. 1 is a block diagram of an exemplary distributed antenna system in which the present invention can be implemented;
FIGs. 2A-B show conventional remote RF units which can be used in the system of FIG. 1;
FIG. 3 is a diagram of a remote RF unit, covered by a housing, using an exemplary method and arrangement for integrating antennas according to the present invention;
FIGs. 4A-B are diagrams of the internal combiner and divider circuitry, respectively, of the remote RF unit of FIG. 3;
FIGs. 5A-B are detailed circuit diagrams showing an exemplary implementation of the circuitry of FIGs. 4A-B.
FIGs. 6A-B are diagrams comparing the coverage areas of a conventional distributed antenna system with the coverage areas of a system incorporating the method and arrangement of the present invention.

### Detailed Description of the Preferred Embodiments

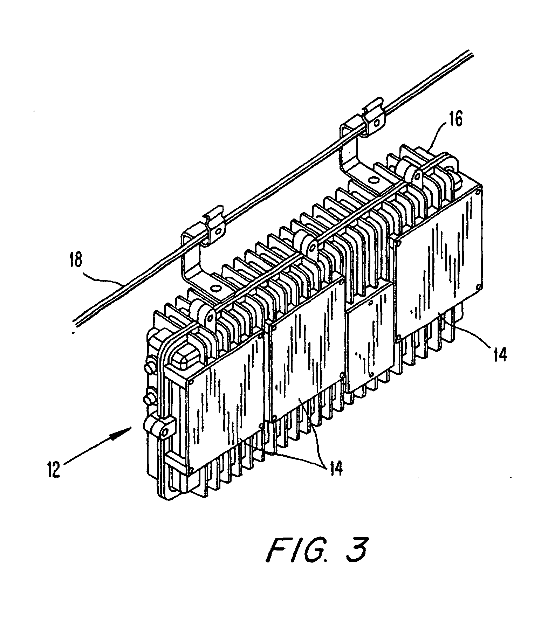

Referring now to FIG. 3, a remote RF unit according to an embodiment of the present invention is shown. As shown, the remote RF unit 12 includes multiple directional patch antennas 14 mounted on each side of the RF unit 12. The directional patch antennas 14 each face a desired direction of signal propagation. The directional patch antennas can each provide, e.g., 5 dBi of gain in the vertical plane. Diversity receive antennas can be of opposite polarity (vertical or horizontal), and spatially separated to decrease correlation. The remote RF unit 12 is preferably covered with a housing 16. The housing 16 can be mounted to a cable television strand 18, as shown, or can be mounted to a telephone pole, wall, or other structure. According to one embodiment of the present invention, the housing 16 can be approximately 23 cm (9 inches) high by 8 cm (3 inches) deep by 50 (20 inches) cm long, and the entire housed unit can weigh approximately 5 kg (12 pounds). The housing can be made of die-cast aluminum which is powder-coated, or other suitable materials. The antennas 14 are preferably mounted substantially flush with the surfaces of the housing 16. As a result of the flush mounting of the antennas 14, the antennas can be covered with radomes (radar domes) to provide environmental protection and to improve the aesthetic appearance of the unit 12. The antennas are integrated, as will be discussed later, to feed the antennas to and from receiver and transmitter ports..

The unit 12 is a remote RF unit which can be used in distributed antenna communication systems. For example, as a remote antenna interface which extracts a single PCS (personal communication system) carrier from a downlink CATV network, and transmits the extracted carrier over an air interface. In the uplink path, the remote unit 12 receives two diversity instances of a single PCS carrier, converts the received instances to different uplink CATV frequencies, and transmits the converted frequencies to a cable processor (not shown) over the cable television transmission network.

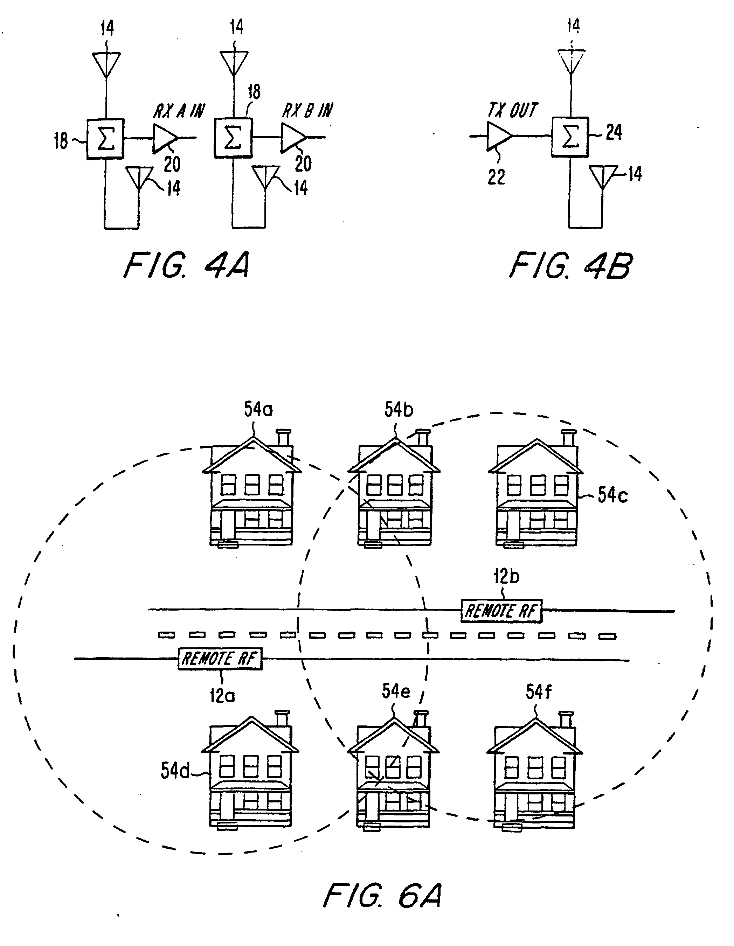

Referring now to FIGS. 4A-B, a circuit diagram of an exemplary means for integrating the antennas 14 is shown. Specifically, FIG. 4A shows a diagram of an exemplary combiner circuit in which two of the antennas 14 are connected to a summing circuit 18. In the circuit of FIG. 4A, the antenna 14 receive signals, the received signals are combined in the summing circuit 18, and the output of the summing circuit 18 is provided to a receiver port 20.

FIG. 4B shows a diagram of an exemplary divider circuit in which the output of a transmission port 22 is provided to a divider element 24, and the output of the divider element 24 is provided to two of the antennas 14. It will be appreciated that the combiner and divider means of FIGS. 4A-B can be modified to allow more than two antennas to be combined or divided.

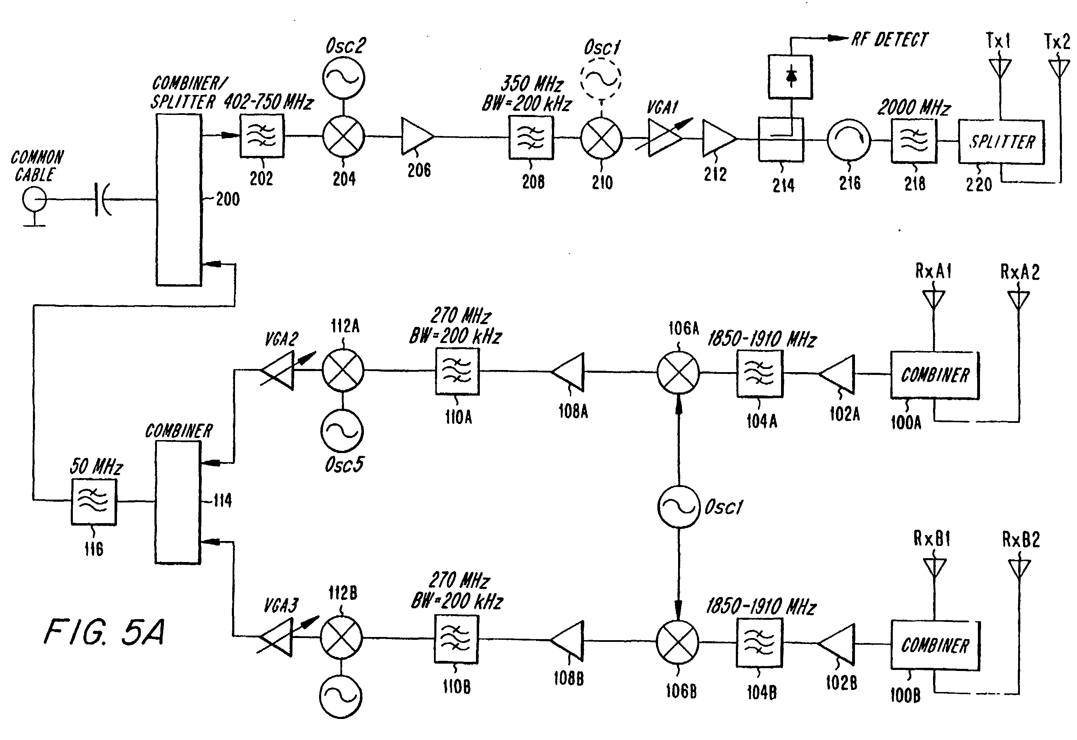

Referring now to FIGS. 5A-D, detailed circuit diagrams of exemplary implementations of the combiner/splitter circuits of FIGS. 4A-B are shown. The receiver portion of the circuit of FIG. 5A will now be described. The receiver circuit shown includes receive antennas RxA1, RxA2, RxB1, and RxB2 for receiving signals, and combiners IOOA and 100B. Combiners 100A and 100B in this embodiment are Wilkinson combiners. It will be appreciated that other suitable passive combiner devices (e.g., quadrature hybrid, resistive, etc.) can be used, depending upon considerations such as power handling, cost, space, etc. The outputs of combiners 100A and 100B are fed to amplifiers 102A and 102B, respectively, and filters 104A and 104B, respectively. Filters 104A and 104B are, according to a preferred embodiment of the present invention, band pass filters having a bandwidth of approximately 1850-1910 MHz. The combined, filtered and amplified received signals are mixed with oscillator signal Oscl in mixers 106A and 106B as shown. Oscillator Oscl is preferably an oscillator operating at approximately 1580-1640 MHz. The modulated output is amplified in amplifiers 108A and 108B.

The outputs of amplifiers 108A and 108B are filtered in band pass filters 110A and 110B, respectively. The filters 110A and 1I0B, according to a preferred embodiment, have a bandwidth of approximately 270 MHz. The output of filter 110A is mixed with oscillator signal Osc5 in mixer 112A, and is amplified by variable gain amplifier VGA2. The output of filter 110B is mixed with an oscillator signal Osc6 in modulator 112B, and is amplified by variable gain amplifier VGA3. The gain of each of the variable gain amplifiers is preferably set based on the received signal strength indication RSSI of the received signal, as determined by circuitry not shown. Certain implementations of such a scheme are described in the commonly assigned U.S. patent application Serial Number 08/683,187, "System and Method for Controlling the Level of Signals Output to Transmission Media in a Distributed Antenna Network". The outputs of variable gain amplifiers 112A and 112B are combined in combiner 114 and the combined signal is filtered in low-pass filter 116, and the filtered signal is supplied to common cable 118 via combiner/splitter 200. Filter 116 is preferably a filter which passes signals below a frequency of approximately 50 MHz. It will be appreciated that the separate receive paths for antennas RxA and RxB provide diversity reception.

The transmission portion of the circuit of FIG. 5A will now be described. The signal to be transmitted is supplied from common cable 118 to combiner/splitter 200. The combiner/splitter 200 splits the signal to be transmitted into two signals, a first signal which is filtered in band pass filter 202. According to a preferred embodiment of the present invention, band pass filter 202 passes signals within a range of approximately 402 to 750 MHz.

This signal is mixed with an oscillator signal Osc2 in mixer 204. The modulated signal is amplified in amplifier 206, and the amplified signal is filtered in band pass filter 208 which has, in this example, a bandwidth of approximately 350 MHz. The filtered signal is mixed with oscillator signal Osc1 in mixer 210, amplified by variable gain amplifier VGA1 and by amplifier 212. The amplified signal is provided to coupler 214, which generates a first signal RF DETECT and a second signal which is supplied to isolator 216. The first signal RF detect is used to adjust the gain of variable gain amplifier VGA1. The isolated signal is filtered in a low pass filter 218, which passes signals having a frequency less than, in this embodiment, approximately 2000 MHz. The filtered signal is split by splitter 220, and the split signals are transmitted from antennas TX1 and TX2. Splitter 220 is, in this embodiment, a hybrid coupler; however, it will be appreciated that other suitable devices (e.g., Wilkinson, quadrature hybrid, resistive, etc.) can be used.

It will be appreciated that in the embodiment of FIG. 5A, a standard transceiver architecture is used, and the embodiment is therefore economical. In this embodiment, the splitter loss occurring at splitter 220 is preferably compensated for by reducing the budgeted link margin.

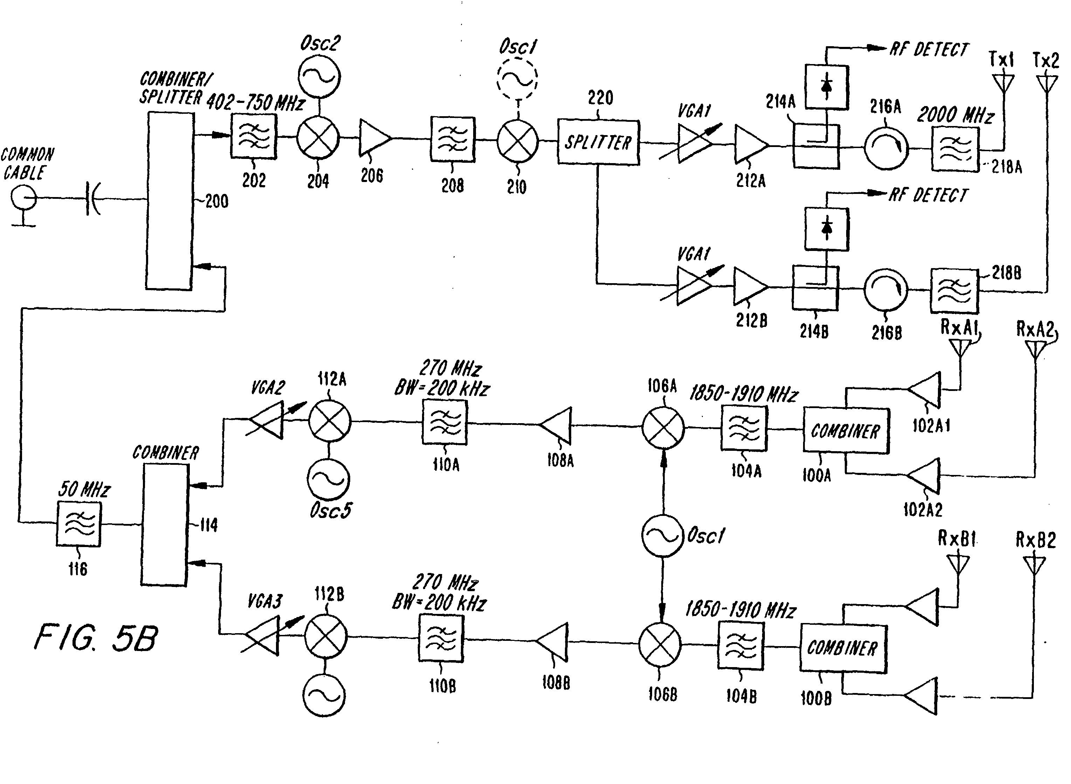

FIG. 5B shows an alternative embodiment of the antenna integration circuitry. In the embodiment of FIG. 5B, each transmitter antenna Tx1, Tx2 has a separate associated transmitter amplifier chain, and each receive antenna RxA1, RxA2, RxB1, and RxB2 has a separate associated low noise amplifier 102A1, 102A2, 102B1, and 102B2. In this embodiment, the transmitter splitting occurs at a point in the transmission path where the loss due to splitting can be compensated for by the amplifiers VGA1 and 212A and 212B. Further, the reception combining occurs at a point in the reception path where the loss due to combining can be compensated by appropriate selection or adjustment of the low noise amplifiers 102A1-102B2. This embodiment allows higher performance than the embodiment of FIG. 5A, but is generally more expensive and complex.

It will be appreciated that FIGs. 5A-B show two embodiments of circuitry for integrating antennas, and that the circuit components shown and described may be modified as necessary depending upon design considerations such as power handling capability, cost, space, etc.

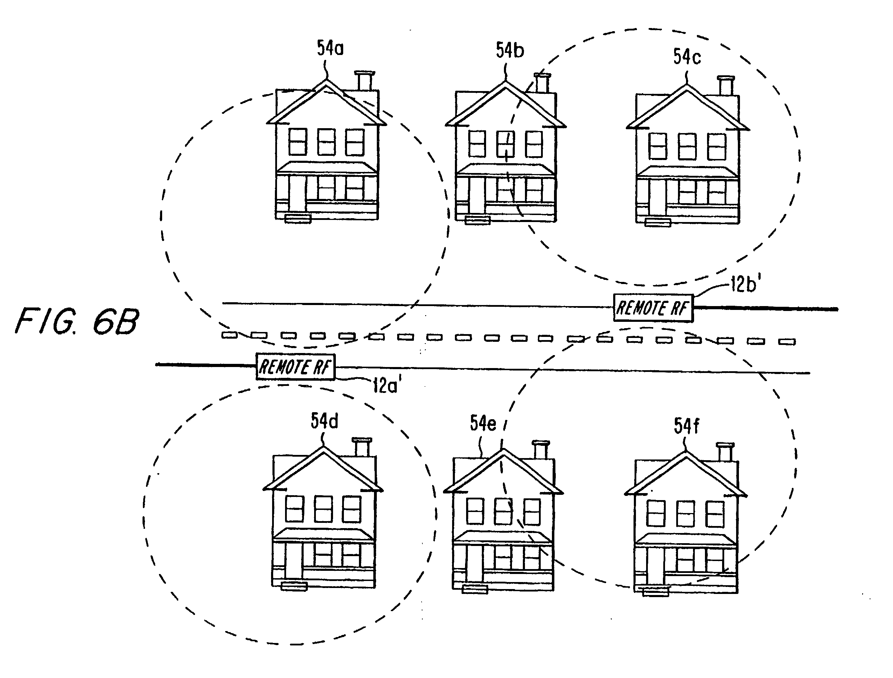

Referring now to FIGS. 6A-B, a comparison of the coverage areas of a conventional distributed antenna system and a distributed antenna using the method and arrangement of the present invention is shown. In FIG. 6A, a suburban application of a distributed antenna system is shown in which onmidirectional remote RF antennas 12a and 12b are used. Omnidirectional remote RF antenna 12a provides coverage to houses 54a and 54d, and omnidirectional antenna 12b provides coverage to houses 54c and 54f. However, because antennas 12a and 12b are omnidirectional, the coverage provided to houses 54b and 54e is subject to interference. This does not provide efficient coverage over the desired area. In contrast, the use of directional antennas 12a and 12b is shown in FIG. 5B. The directional antennas allows coverage to be provided to the houses 54a-f without interference, thus covering the desired area in a more efficient manner.

## Claims

1. A distributed antenna communications system, **characterized by**:
a central distribution unit (10);
a plurality of remote RF units (12) connected to said central distribution unit (10), each remote RF unit (12) comprising a plurality of patch antennas (14) disposed on one or more surfaces of the RF unit (12);
each of said plurality of remote RF units (12) having a respective housing (16) and connection to said control distribution unit (10) such that said remote RF units (12) can be geographically distributed over a desired area in said system;
integrating each of said plurality of antennas (14) at each remote RF unit (12) by providing one or more internal RF combining circuits (18) within each of said plurality of remote RF units (12), each combining circuit (18) combining signals received from two or more of the antennas, and providing one or more internal dividing circuits (24) within each of said plurality of remote RF units (12), each dividing circuit (24) dividing signals to be propagated from one signal source into at least two signals for propagation from at least two antennas.

2. The method of claim 1, wherein the antennas are mounted substantially flush with one or more surfaces of the housing.

3. The method of claim 1, wherein each antenna is covered with a radome.

4. The method of claim 1, wherein the housing is substantially weatherproof.

5. The method of claim 1, wherein the each combining circuit and each dividing circuit includes a Wilkinson device.

## Patentansprüche

1. Verteiltes Antennen-Kommunikationssystem, **gekennzeichnet durch**:
eine zentrale Übertragungseinheit (10);
eine Mehrzahl von RF-Ferneinheiten (12), die mit der zentralen Übertragungseinheit (10) verbunden sind, wobei jede RF-Ferneinheit (12) eine Mehrzahl von Stückantennen (14) enthält, die auf einer oder mehreren Oberflächen der RF-Einheit (12) angebracht sind;
wobei jede der Mehrzahl von RF-Ferneinheiten (12) ein jeweiliges Gehäuse (16) hat und eine Verbindung zu der Steuerungsübertragungseinheit (10), so dass die RF-Ferneinheiten (12) geographisch über ein gewünschtes Gebiet in dem System verteilt sein können;
wobei jede der Mehrzahl von Antennen (14) an jeder RF-Ferneinheit (12) integriert ist **durch** Bereitstellen einer oder mehrerer interner RF-Verbindungsschaltungen (18) innerhalb jeder der Mehrzahl von RF-Ferneinheiten (12),
wobei jede Verbindungsschaltung (18) Signale verbindet, die von zwei oder mehreren der Antennen empfangen werden, und **durch** Bereitstellen einer oder mehrerer interner Verteilerschaltungen (24) innerhalb jeder der Mehrzahl von RF-Ferneinheiten (12), wobei jede Verteilerschaltung (24) von einer Signalquelle auszubreitende Signale auf mindestens zwei Signale, zur Ausbreitung **durch** mindestens zwei Antennen, verteilt.

2. Verfahren nach Anspruch 1, wobei die Antennen im wesentlichen bündig mit einer oder mehreren Oberflächen des Gehäuses verbunden werden.

3. Verfahren nach Anspruch 1, wobei jede Antenne mit einem Radom überdeckt wird.

4. Verfahren nach Anspruch 1, wobei das Gehäuse im wesentlichen wetterfest ist.

5. Verfahren nach Anspruch 1, wobei jede Verbindungsschaltung und jede Verteilerschaltung eine Wilkinson-Einrichtung enthält.

## Revendications

1. Système de communication à antennes réparties, **caractérisé par** :
une unité de distribution centrale (10);
une pluralité d'unités RF distantes (12) connectées à l'unité de distribution centrale (10), chaque unité RF distante (12) comprenant une multiplicité d'antennes à plaque (14) disposées sur une ou plusieurs surfaces de l'unité RF (12);
chacune de la pluralité d'unités RF distantes (12) ayant un boîtier respectif (16) et une connexion vers l'unité de distribution centrale (10), de façon que ces unités RF distantes (12) puissent être réparties géographiquement sur une zone désirée dans le système;
l'intégration de chacune de la pluralité d'antennes (14) à chaque unité RF distante (12) par l'incorporation d'un ou de plusieurs circuits de combinaison RF internes (18) dans chacune de la pluralité d'unités RF distantes (12), chaque circuit de combinaison (18) combinant des signaux reçus à partir de deux des antennes, ou plus, et l'incorporation d'un ou de plusieurs circuits de division internes (24) dans chacune de la pluralité d'unités RF distantes (12), chaque circuit de division (24) divisant des signaux devant se propager à partir d'une source de signal, en au moins deux signaux pour la propagation à partir d'au moins deux antennes.

2. Procédé selon la revendication 1, dans lequel les antennes sont montées de façon pratiquement affleurante par rapport à une ou plusieurs surfaces du boîtier.

3. Procédé selon la revendication 1, dans lequel chaque antenne est recouverte par un radôme.

4. Procédé selon la revendication 1, dans lequel le boîtier offre une bonne résistance aux intempéries.

5. Procédé selon la revendication 1, dans lequel chaque circuit de combinaison et chaque circuit de division comprend un dispositif de Wilkinson.
